# EUROPEAN PATENT APPLICATION

(11) **EP 1 708 082 A1**
(43) Date of publication of application: **04.10.2006**
(21) Application number: 06251298.3
(22) Date of filing: 10.03.2006
(51) Int. Cl.: G06F 9/00, G01R 15/12, H02B 15/02

(54) **Active flowchart label**

(30) Priority: 31.03.2005 US 97621
(71) Applicant: Tektronix Inc., Beaverton, Oregon 97077 (US)
(72) Inventor: Miller, Stanley G., Beaverton, Oregon 97008 (US); Ainsworth, Kenneth M., Aloha, Oregon 97006 (US); Reinhold, Steve U., Hillsboro, Oregon 97123 (US)
(74) Representative: Hutchinson, Glenn Stanley

(57) **Abstract**

An active flowchart label is provided for displaying information regarding the state of an instrument. A label is provided having transmissive regions positioned within a graphical representation of a circuit path or in relation to textual messages provided on the label. Light sources within the instrument are positioned to illuminate the transmissive regions when activated to communicate which circuit paths are active. Additional light sources within the instrument are positioned to illuminate transmissive regions associated with the textual messages to provide additional information regarding the operation of the instrument. Light channels may be provided to direct the light from the light sources to the transmissive regions.

## Description

### BACKGROUND

The present invention relates generally to a graphical display, and more specifically to a display for displaying the mode of an instrument during operation.

Graphical displays been used to communicate information about the operation of industrial processes or transportation systems, such as subways and railyards, These displays systems used indicators which were wired directly to the display system. The display systems were a separate system from the actual system being monitored.

When operators are using an instrument to make measurements, it is often desirable to know the present state of the instrument. It may also be desirable to observe the changing state of the instrument, for example during automated testing operations.

A label with an "on/off" indication may be used to communicate whether the instrument is "on" or "off". The "on/off" indication may be provided by an indication light attached to the front panel, for example. Additional labels, along with their respective indicators, may be used to describe the state of the instrument when more specific and detailed information is required. In the case of a measurement instrument, the number of possible modes and combinations of modes may increase the number of labels that are needed. As the number of labels increases, it may become more difficult for the operator to readily determine the operating mode of the instrument. During automated operations, the operator may have even greater difficulty understanding which sequence of modes the instrument is using.

### SUMMARY

Accordingly, embodiments of the present instrument label are provided with more intuitive and graphical representations to communicate the operating mode of the instrument. A flowchart graphic is rendered on a panel, and transmissive regions are provided within the flowchart graphic. Light sources positioned within the instrument and aligned with the transmissive regions illuminate the transmissive regions to comminicate information about the operating mode, or state, of the instrument to the user.

Aspects of the various embodiments of the present invention will become apparent from the following detailed description when read in conjunction with appended claims and attached drawings.

### BRIEF DESCRIPTION OF THE DRAWINGS

Figure 1 illustrates a top view of an embodiment of an active flowchart label.

Figure 2 illustrates a portion of an active flowchart label.

Figure 3 illustrates a portion of an active flowchart label.

Figure 4 illustrates a cross-sectional view of an instrument including the active flowchart label of Fig. 1.

Figure 5 illustrates a cross-sectional view of an instrument including the active flowchart label of Fig. 1.

Figure 6, illustrates a cross-sectional view of the instrument of Fig. 2 partially disassembled.

### DETAILED DESCRIPTION

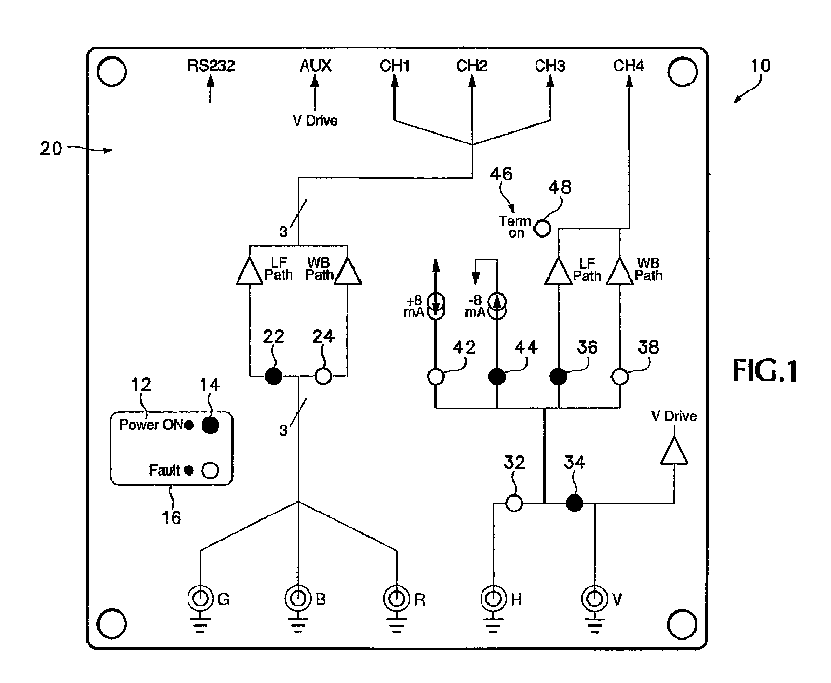

Referring to Figure 1, an active flowchart label 10 has a textual label 12 stating, "Power ON," along with an indicator 14. In this example, textual labels are provided in a text box 16 to indicate general information applicable to the instrument. A schematic label 20 is provided along with multiple indicators. Several indicators are positioned within the circuit path illustrated by the schematic label 20 such that the indicators can identify which circuit path is operating. For example, an indicator 22, as shown, indicates that the "LF Path" is connected. An indicator 24 may indicate that the "WB Path" is connected when it is illuminated. Similarly, indicators 32 and 34 may be used to identify which input, "H" or "'V" is being used. As shown, the indicator 34 is illuminated to indicate that "V" is being used as the input. Another set of indicators 36 and 38 may then be used to determine whether the "LF Path" or the "WB Path" has been selected. As shown, the indicator 36 is illuminated to indicate that the "LF Path" is active. Further information on the mode of operation may be provided by indicators 42 and 44. As shown, indicator 44 is illuminated indicating that that optional circuit is connected. A textual label 26 stating "Term on," along with its corresponding indicator 28, is provided within the area of schematic label 20 to provide additional information on the mode of operation.

The active flowchart label provides an intuitive and readily understandable means for communicating the current mode of operation of the instrument to the operator. During automated testing, the changing pattern of indicators may allow the operator to follow the testing sequence and confirm that the test is running.

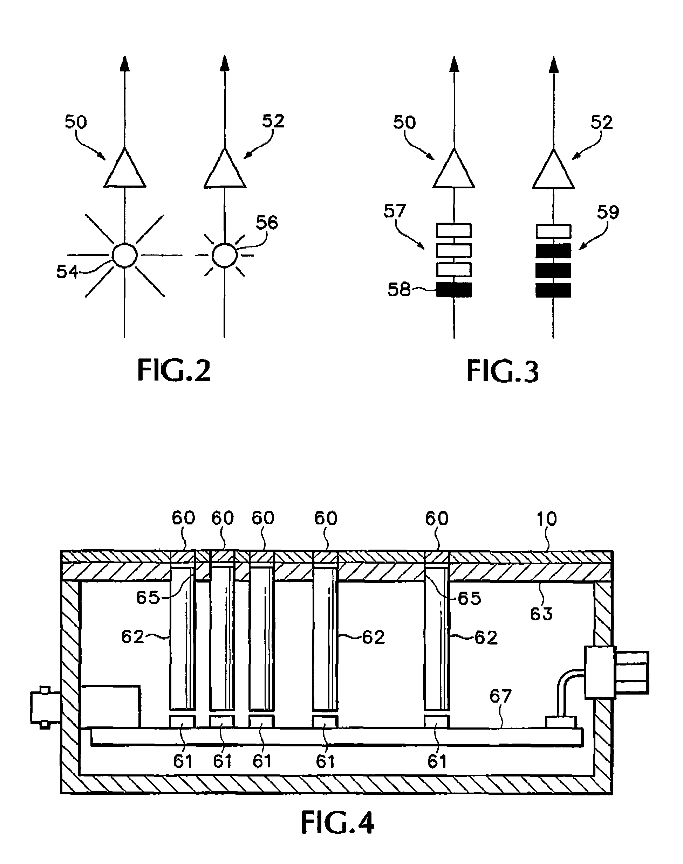

Figure 2 illustrates an embodiment using two related indicators. This embodiment may be used to indicate the intensity of the signal. A first circuit path 50 corresponds to a first signal and a second circuit path 52 corresponds to a second signal. A first indicator 54 is positioned within the first circuit path 50, and a second indicator 56 is positioned within the second circuit path 52. As shown, the length of the rays radiating from each indicator 54 and 56 correspond to the brightness of each signal. The brightness of each indicator corresponds to the signal intensity of each signal. For example, a dim indicator corresponds to a low signal as shown by indicator 54, and a bright indicator corresponds to a high signal as shown by indicator 52. The relative brightness between multiple indicators may communicate the relative signal strength between multiple signals. For example, the relative mix of two signals is indicated by the relative intensity of two indicators, as shown in Fig. 2.

Figure 3 illustrates another embodiment for communicating the intensity of the signal. A first circuit path 50 and a second circuit path 52 are shown. A first set of indicators 57 is positioned within the first circuit path 50, and a second set of indicators 59 is positioned within the second circuit path 52. Both the first set of indicators 57 and the second set of indicators 59 comprise multiple indicators 58. The signal intensity can be communicated by illuminating one, or more, of the appropriate indicators 58. The number of indicators in each set of indicators illuminated corresponds to the relative intensity of the signal. In an alternative embodiment, the number of indicators may correspond to the relative gain or attenuation level.

In some embodiments of the present active flowchart label, the indicator is illuminated to indicate that the identified item is on, or that the corresponding circuit is connected. Inactivate indicators remain off. In alternative embodiments, different colors could be used to indicate different states, for example green for on and red for off. Multiple colors may also be used to indicate additional modes when the state may be more than merely on or off, for example, red for on, yellow for on plus an ancillary signal, or green for on plus the presence of a different ancillary signal. Differences in color may also be used to identify default settings versus alternative settings, such as green for a default setting and amber for an alternative setting. In other embodiments, differences in color could indicate red for poor signal, yellow for adequate signal, and green for strong signal. In this embodiment, the no signal could be indicated by leaving the indicator off. The power on indicator could use color to communicate green for electrical outlet, yellow for battery, and red for battery low.

Figure 4 shows a cross-sectional view of an embodiment of an instrument comprising an active flowchart label 10 attached to an instrument panel 63. As used herein, the term "instrument" refers broadly to any electrical device having multiple operating modes, including interface modules that may be connected to another instrument. In the embodiment shown, the indicators comprise transmissive regions 60 in the label 10 aligned with holes 65 in the instrument panel 63. The transmissive regions 60 allow light to pass through to enable a user to identify which indicator is active. The transmissive regions 60 may be transparent or translucent. Translucent regions may scatter the light providing a greater viewing angle than a transparent region. The translucent regions may provide a higher perceived brightness for the user. Light sources 61 are mounted to a circuit board 67 and aligned with the position of the transmissive regions 60 to allow light from the light sources 61 to pass through the corresponding transmissive regions 60 to indicate which mode the instrument is in, A.s shown in the embodiment illustrated by Fig. 4, light channels 62 are provided between the light sources 61 and the transmissive regions 60.

In an embodiment of the present instrument, the light channels 62 comprise hollow tubes, which allow light to pass from a light source 61 to its corresponding transmissive region 60 while simultaneous reducing, or eliminating, the amount of light from adjacent light sources 61 impinging on its corresponding transmissive region 60. In certain embodiments, the light channels 62 may be hollow, tubes, possibly formed from metal, or other opaque material. The term "tube" as used herein refers generally to an elongated, hollow obj ect, and includes cylinders, square tubing, as well as other shapes of cross-section.

In an alternative embodiment of the present instrument, the light channels 62 comprise light pipes, which are formed using a transparent material capable of transmitting light entering at their ends 64 to the transmissive regions 60. The light pipes may be formed from any suitable transparent material, such as glass, plastic, or acrylic. In one embodiment, for example, the light pipes are cylindrical acrylic rods. Light pipes may allow more light to be directed from a light source 61 to a corresponding transmissive region 60 while reducing the amount of light from adjacent light sources.

In an alternative embodiment, the light channels 62 may comprise a transparent material within an opaque tube. This may be formed by filling a metal tube with acrylic, optical epoxy, or other suitable transparent material.

The light sources 61 are any light source that can be mounted within the instrument. For example, the light sources 61 may be LEDs, small light bulbs, or laser diodes. In one embodiment, the light sources 61 are surface mounted LEDs. The light sources 61 may produce a single color, such as a red LED, or multiple colors, such as multicolor LEDs.

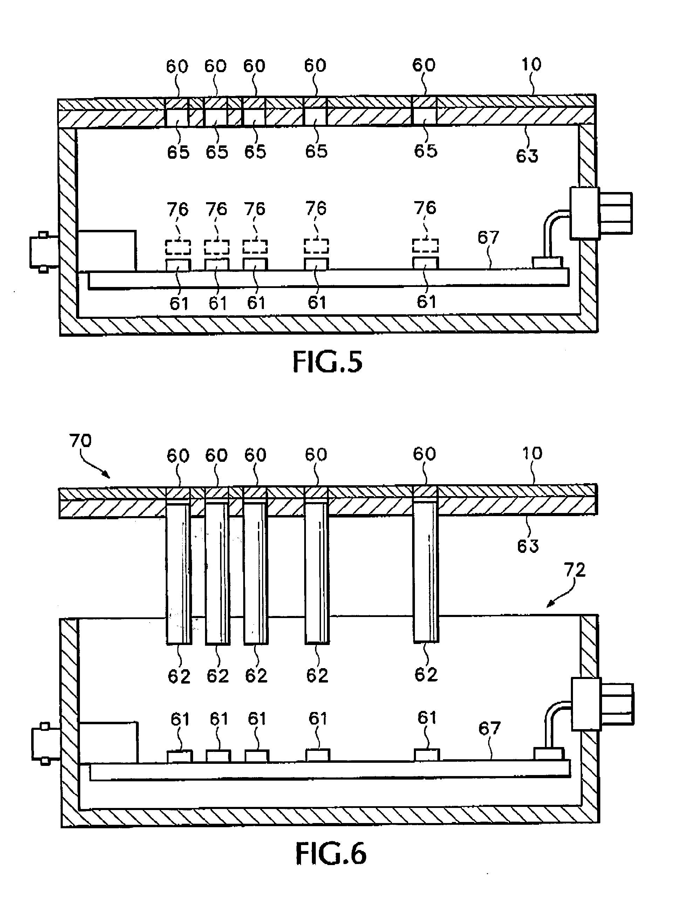

Fig. 5 illustrates another embodiment of the present instrument without the use of light channels 62. To avoid having light from the light sources 61 impinging on adjacent transmissive regions 60, the light sources may be collimated or focused. In one embodiment, a lens 76 is used. The lens 76 may be a collimating lens that directs the light from each light source 61 to its corresponding transmissive region 60. In another embodiment, the lens is a focusing lens, which is used to focus the light from the lights sources 61 onto the corresponding transmissive regions 60 to prevent the light from impinging on adjacent transmissive regions. The lens 76 is illustrated using dashed lines, because it may be eliminated in some embodiments. The collimation can be achieved, without the use of a lens, by using light sources that are inherently collimated, such as laser diodes or LEDs without integral, diverging lenses.

Fig. 6 illustrates an embodiment of the present instrument. An active flowchart label assembly 70 has been removed from the instrument 72. As is clear from the figure, there are no connections between the active flowchart label assembly 70 and the instrument 72. There is no need for an electrical connection between the active flowchart label assembly 70 and the instrument 72. All of the electrical components remain with the instrument 72 to enable easy assembly and access to the circuit board 67 when necessary. The light sources 61 are connected on the circuit board 74, which contains other circuitry related to the operation of the instrument, along with electrical connections for the inputs and outputs.

An embodiment of the active flowchart label assembly is produced by providing holes in an instrument panel 63, which may be made from sheet metal for example, and installing thread standoffs, not shown, through these holes. The threaded standoffs may be PEM® SOS-832-6 model standoffs, for example. A polycarbonate fllm, such as LEXAN® polycarbonate, with clear widow areas, and backed with adhesive transfer is used to form the active flowchart label 10. The adhesive transfer is used to attach the active flowchart label 10 to the instrument panel 63. Cylindrical acrylic rods are then threaded into the threaded standoffs to provide light pipes to serve as the light channels 62. In an alternative embodiment, threaded, or unthreaded, standoffs may be used as the light channels 62, without using light pipes.

An embodiment of the present instrument is created by determining the basic dimensions of the instrument case. The active flow chart label is then designed to communicate the operation mode or other information to the user. The indicators are then positioned to actively communicate the operating mode of the instrument, along with any other information. Once the positions of the indicators on the label have been determined, the corresponding positions of the light sources on the circuit board are determined to provide proper alignment between each light source and its corresponding indicator. The remaining circuitry is then laid out on the circuit board such that it will operate as required without interfering with the placement of the light sources. The final design of the instrument including the active flowchart label and the circuit board may require an iterative design cycle, which may require repeating the basic design process described above until a final active flowchart label is achieved.

It will be obvious to those having skill in the art that many changes may be made to the details of the above-described embodiments of this invention without departing from the underlying principles thereof. The scope of the present invention should, therefore, be determined only by the following claims.

## Claims

1. An apparatus for displaying the mode information of an instrument comprising:
a flowchart graphic rendered on a panel;
a plurality of transmissive indicator regions positioned within the flowchart graphic; and
a plurality of light sources positioned within the instrument and aligned with the plurality of transmissive indicator regions.

2. The apparatus of claim 1, wherein the plurality of transmissive indicator regions are translucent.

3. The apparatus of claim 1, wherein the plurality of lights sources are selected from the group consisting of light bulbs, LEDs, and laser diodes.

4. The apparatus of claim 3, wherein the plurality of lights sources are positioned on a circuit board comprising instrument electronics.

5. The apparatus of claim 4, further comprising a plurality light channels interposed between the plurality of light sources and the plurality of transmissive indicator regions.

6. The apparatus of claim 5, wherein the light channels are formed using transparent light pipes.

7. The apparatus of claim 6, wherein the transparent light pipes are cylindrical rods.

8. The apparatus of claim 6, wherein the transparent light pipes are acrylic, plastic or glass.

9. The apparatus of claim 8, wherein the plurality of light channels are attached to the panel forming a passive panel assembly without any electrical connections to the instrument electronics.

10. The apparatus of claim 1, further comprising a plurality of lens elements interposed between the plurality of lights sources and the plurality of transmissive indicator regions.

11. An apparatus for displaying operating mode information for an instrument comprising:
means for generating an optical signal corresponding to the operating mode of the instrument;
means for communicating the optical signal to indicate the operating mode of the instrument; and
means for transmitting the optical signal from the means for generating the optical signal and the means for communicating the optical signal.

12. The apparatus of claim 11, wherein the means for generating an optical signal is selected from the group consisting of light bulbs, LEDs and laser diodes.

13. The apparatus of claim 11, wherein the means for communicating the optical signal comprises an instrument panel having transmissive regions.

14. The apparatus of claim 11, wherein the means for communicating the optical signal comprises an instrument panel displaying a flowchart with transmissive regions positioned to indicate active paths within the flowchart.

15. The apparatus of claim 11, wherein the means for transmitting the optical signal comprises a light channel.

16. The apparatus of claim 11, wherein the means for transmitting the optical signal comprises a light pipe.

17. The apparatus of claim 11, wherein the means for transmitting the optical signal comprises a lens interposed between the means for generating the optical signal and the means for passively communicating the optical signal.

18. A method of producing an active flowchart label comprising,
preparing a flowchart label to communicate information related to operating modes of an instrument;
locating indicators on the flowchart label corresponding to alternative flowchart paths;
positioning light sources on a circuit board within the instrument aligned to the indicators on the flowchart label; and
designing circuitry for the instrument by positioning the circuitry around the light sources.
